# NEUE EUROPÄISCHE PATENTSCHRIFT

(11) **EP 3 478 523 B2**
(45) Veröffentlichungstag und Bekanntmachung des Hinweises auf die Entscheidung über den Einspruch: **31.07.2024**
(45) Hinweis auf die Patenterteilung: 09.09.2020
(21) Anmeldenummer: 17724010.8
(22) Anmeldetag: 16.05.2017
(51) Int. Cl.: B60K 6/00, F16F 15/123, F16F 15/14, F16F 15/134, B60K 6/40, B60K 6/48

(54) **HYBRIDANTRIEBSMODUL FÜR EINEN KRAFTFAHRZEUGANTRIEBSSTRANG UND KRAFTFAHRZEUGANTRIEBSSTRANG**
HYBRID DRIVE MODULE FOR A MOTOR VEHICLE DRIVE TRAIN AND MOTOR VEHICLE DRIVE TRAIN
MODULE HYBRIDE POUR GROUPE MOTOPROPULSEUR DE VÉHICULE AUTOMOBILE ET GROUPE MOTOPROPULSEUR DE VÉHICULE AUTOMOBILE

(30) Priorität: 30.06.2016 DE 102016211943
(43) Veröffentlichungstag der Anmeldung: 08.05.2019
(73) Patentinhaber: ZF Friedrichshafen AG, 88046 Friedrichshafen (DE)
(72) Erfinder: FÜHRER, Kim, 88131 Lindau (DE); CUDOK, Matthias, 98617 Ritschenhausen (DE); RIEDISSER, Thomas, 88131 Lindau (DE); MÜLLER, Thorsten, 88048 Friedrichshafen (DE); STROPH, Stephan, 88069 Tettnang (DE)
(74) Vertreter: ZF Friedrichshafen AG
(86) Internationale Anmeldenummer: PCT/EP2017/061727
(87) Internationale Veröffentlichungsnummer: WO 2018/001620

(56) Entgegenhaltungen:
- EP-A1- 2 853 773
- DE-A1- 102010 030 690
- DE-A1- 102012 205 797
- JP-A- 2015 222 118

## Beschreibung

Die Erfindung betrifft ein Torsionsschwingungsdämpfungssystem für einen Kraftfahrzeugantriebsstrang, umfassend eine Eingangsseite und eine Ausgangsseite, welche über eine Dämpfungseinrichtung mit mindestens einem Torsionsschwingungsdämpfer und einen Schwingungstilger verbunden sind, wobei die Dämpfungseinrichtung und der Schwingungstilger für die Anordnung in einem Nassraum eines Gehäuses ausgestaltet sind.

Des Weiteren betrifft die Erfindung ein Hybridantriebsmodul, umfassend ein Gehäuse, in welchem ein Torsionsschwingungsdämpfungssystem und eine Elektromaschine aufgenommen sind, wobei sich das Torsionsschwingungsdämpfungssystem aus einer Dämpfungseinrichtung und einem Schwingungstilger zusammensetzt, die zwischen einer Eingangsseite und einer Ausgangsseite des Torsionsschwingungsdämpfungssystems vorgesehen und in einem Nassraum des Gehäuses platziert sind, wobei das Torsionsschwingungsdämpfungssystem an seiner Ausgangsseite mit einer Trennkupplung verbunden ist, über welche das Torsionsschwingungsdämpfungssystem mit einer Abtriebsseite des Hybridantriebsmoduls verbindbar ist, mit der auch die Elektromaschine in Verbindung steht. Schließlich betrifft die Erfindung ein Kraftfahrzeugetriebe sowie einen Kraftfahrzeugantriebsstrang mit einem vorgenannten Hybridantriebsmodul.

Ein Kraftfahrzeugantriebsstrang bildet als Feder-Masse-System ein schwingungsfähiges System, in welchem Drehungleichförmigkeiten auftreten können. Umfasst der Kraftfahrzeugantriebsstrang eine Antriebsmaschine in Form einer Verbrennungskraftmaschine, so werden diese Drehungleichförmigkeiten bzw. Torsionsschwingungen bereits durch die Antriebsmaschine in das System eingebracht, da sich aufgrund der Betriebsweise der Verbrennungskraftmaschine periodisch wirkende Drehkräfte mit der eigentlichen Drehbewegung der Kurbelwelle der Verbrennungskraftmaschine überlagern. Da Torsionsschwingungen den Fahrkomfort merklich mindern und auch eine hohe Bauteilbelastung bis hin zu deren Beschädigung zur Folge haben können, werden in einem Kraftfahrzeugantriebsstrang üblicherweise Maßnahmen getroffen, um Torsionsschwingungen zu dämpfen und damit zu reduzieren.

Häufig ist zu diesem Zweck zwischen der Verbrennungskraftmaschine und einem Kraftfahrzeuggetriebe ein Torsionsschwingungsdämpfungssystem vorgesehen, in welchem mithilfe mindestens eines Torsionsschwingungsdämpfers gezielt Torsionsschwingungen im relevanten Frequenzbereich abgedämpft werden. Ein Torsionsschwingungsdämpfer, bei welchem es sich beispielsweise um ein Zweimassenschwungrad handeln kann, ist hierzu auf den entsprechenden Frequenzbereich ausgelegt. Des Weiteren umfasst ein Torsionsschwingungsdämpfungssystem häufig auch einen Schwingungstilger, durch welchen mittels drehzahlabhängiger Auslenkung zusätzlicher Massen eine gezielte Verstimmung des schwingungsfähigen Systems hervorgerufen und damit ebenfalls eine Reduzierung von Torsionsschwingungen erreicht wird.

Vermehrt ist ein vorstehend beschriebenes Torsionsschwingungsdämpfungssystem auch Teil eines Hybridantriebsmoduls, bei welchem zusätzlich eine Elektromaschine zur Darstellung bestimmter Fahrfunktionen vorgesehen ist. Diese Elektromaschine wird dabei üblicherweise an einer Ausgangsseite des Hybridantriebsmoduls angeordnet, wobei die Ausgangsseite mit einer Eingangsseite des Hybridantriebsmoduls über das zwischenliegende Torsionsschwingungsdämpfungssystem durch Schließen einer Trennkupplung verbunden werden kann. Insofern kann durch Öffnen der Trennkupplung die Ausgangsseite von der Eingangsseite getrennt und damit auch ein Betrieb der Elektromaschine ohne mechanische Verbindung zur Verbrennungskraftmaschine realisiert werden. So kann ein rein elektrisches Fahren oder auch eine Rückgewinnung elektrische Energie im Bremsbetrieb (Rekuperation) verwirklicht werden, wohingegen bei geschlossener Trennkupplung Fahrfunktionen, wie zum Beispiel ein Generatorbetrieb der Elektromaschine, ein Boosten über die Elektromaschine, eine Start-Stopp-Funktion, etc., darstellbar sind.

Aus der DE 10 2012 219 728 A1 geht ein Hybridantriebsmodul für einen Kraftfahrzeugantriebsstrang hervor, wobei bei diesem Hybridantriebsmodul ein Torsionsschwingungsdämpfungssystem und eine Elektromaschine in einem Gehäuse aufgenommen sind. Das Torsionsschwingungsdämpfungssystem setzt sich aus einer Dämpfungseinrichtung mit einem Torsionsschwingungsdämpfer und einem Schwingungstilger zusammen, die zwischen einer Eingangsseite und eine Ausgangsseite des Torsionsschwingungsdämpfungssystems vorgesehen und in einem Nassraum des Gehäuses platziert sind. Zudem arbeitet der Torsionsschwingungsdämpfer nach dem Leistungsverzweigungsprinzip, indem die Eingangsseite und die Ausgangsseite ferner über ein Überlagerungsgetriebe miteinander gekoppelt sind. Die Ausgangsseite des Torsionsschwingungsdämpfungssystems ist des Weiteren mit einer Trennkupplung verbunden, über welche das Torsionsschwingungsdämpfungssystem mit einer Abtriebsseite des Hybridantriebsmoduls verbunden werden kann. Mit dieser Abtriebsseite steht dann auch ein Rotor der Elektromaschine in Verbindung. Ausgehend vom vorstehend beschriebenen Stand der Technik ist es nun die Aufgabe der vorliegenden Erfindung, ein Hybridantriebsmodul mit einem Torsionsschwingungsdämpfungssystem zu schaffen, mittels welchem eine geeignete Dämpfung von Torsionsschwingungen realisierbar sein soll.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben jeweils vorteilhafte Weiterbildungen der Erfindung wieder. Anspruch 9 betrifft einen Kraftfahrzeugantriebsstrang.

Gemäß der Erfindung umfasst ein Torsionsschwingungsdämpfungssystem in einem Hybridantriebsmodul eine Eingangsseite und eine Ausgangsseite, welche über eine Dämpfungseinrichtung mit mindestens einem Torsionsschwingungsdämpfer und einen Schwingungstilger verbunden sind. Dabei sind die Dämpfungseinrichtung und der Schwingungstilger für die Anordnung in einem Nassraum eines Gehäuses ausgestaltet.

Das Torsionsschwingungsdämpfungssystem weist also eine Dämpfungseinrichtung auf, die mindestens einen Torsionsschwingungsdämpfer umfasst. Bei einem Torsionsschwingungsdämpfer handelt es sich im Sinne der Erfindung um ein System, bei welchem eine Primärseite und eine Sekundärseite über mindestens ein zwischenliegendes Element drehelastisch miteinander gekoppelt sind, wodurch eine Schwingungsisolation erreicht wird. Bei dem mindestens einen zwischenliegenden Element handelt es sich bevorzugt um ein Federelement in Form einer Schraubenfeder. Insofern ist der Torsionsschwingungsdämpfer bevorzugt als Zweimassenschwungrad gestaltet. Gegebenenfalls kann dabei aber zudem auch noch eine hydraulische Dämpfung vorgesehen sein.

Der Schwingungstilger wird bevorzugt durch mehrere Massen gebildet, welche drehzahlabhängig ausgelenkt werden und hierbei das schwingungsfähige System gezielt verstimmen. Besonders bevorzugt sind die Massen hierzu an einem Ende drehbar angelenkt, um unter Drehzahleinfluss nach radial außen ausgelenkt werden zu können.

Im Sinne der Erfindung ist unter einem "Nassraum" eines Gehäuses ein abgegrenzter Raum des jeweiligen Gehäuses zu verstehen, in welchem Schmiermittel, bevorzugt in Form von Öl, aufgenommen ist und in dem die hierin befindlichen Komponenten mit dem Schmiermittel in Kontakt gelangen können. Insbesondere ist der Nassraum des Gehäuses dabei bis zu einem definierten Maß mit Schmiermittel befüllt, um eine Tauchschmierung von in dem Gehäuse aufgenommenen Komponenten zu realisieren.

Dass die Dämpfungseinrichtung und der Schwingungstilger für die Anordnung in einem Nassraum ausgestaltet sind, bedeutet vorliegend, dass die Dämpfungseinrichtung und der Schwingungstilger bezüglich ihrer Schmierung darauf abgestimmt sind, in einem Nassraum eines Gehäuses angeordnet zu sein. So werden die Dämpfungseinrichtung und der Schwingungstilger insbesondere von radial innen mit Öl versorgt und das Öl danach einfach nach radial außen abgeführt. Im Vergleich zu einer Anordnung der Dämpfungseinrichtung und des Schwingungstilger in einem Trockenraum kann hierdurch eine Schmiermittelversorgung dieser Komponenten realisiert werden, ohne dass das Schmiermittel an einem Entweichen nach radial außen gehindert werden muss.

Die Erfindung umfasst nun die technische Lehre, dass die Dämpfungseinrichtung zwei Torsionsschwingungsdämpfer umfasst. Mit anderen Worten setzt sich also die Dämpfungseinrichtung aus zwei Torsionsschwingungsdämpfern zusammen, die gemeinsam mit dem Schwingungstilger zwischen der Eingangsseite und der Ausgangsseite des Torsionsschwingungsdämpfungssystems angeordnet sind.

Eine derartige Gestaltung eines Torsionsschwingungsdämpfungssystems hat dabei den Vorteil, dass durch das Vorsehen von zwei Torsionsschwingungsdämpfern eine bessere Dämpfung von Torsionsschwingungen im Kraftfahrzeugantriebsstrang erreicht werden kann. Denn die Anordnung zweier Torsionsschwingungsdämpfer ermöglicht eine Reduzierung der Verdrehsteifigkeit der Dämpfungseinrichtung. Insgesamt kann also bei einem erfindungsgemäß gestalteten Torsionsschwingungsdämpfungssystem eine zuverlässige Dämpfung von Torsionsschwingungen bei gleichzeitig zuverlässiger Schmierung von Komponenten des Systems verwirklicht werden.

Bei der DE 10 2012 219 728 A1 sind zwar die Dämpfungseinrichtung und der Schwingungstilger ebenfalls für die Anordnung in einem Nassraum eines Gehäuses ausgestaltet, die Dämpfungseinrichtung wird hierbei allerdings nur durch einen Torsionsschwingungsdämpfer gebildet.

Erfindungsgemäß sind die Eingangsseite und die Ausgangsseite des Torsionsschwingungsdämpfungssystems nur über die zwischenliegende Dämpfungseinrichtung und den Schwingungstilger miteinander gekoppelt. Es ist im Rahmen der Erfindung jedoch auch denkbar, hier einen leistungsverzweigten Aufbau zu realisieren, indem dem Torsionsschwingungsdämpfungssystem ein Überlagerungsgetriebe zugeordnet wird, wie dies beispielsweise auch in der DE 10 2012 219 728 A1 offenbart ist. So könnte sich ein Überlagerungsgetriebe aus ein oder auch mehreren Planetenstufen zusammensetzen.

Entsprechend einer Ausführungsform der Erfindung sind die Torsionsschwingungsdämpfer der Dämpfungseinrichtung in Reihe geschaltet. Die Torsionsschwingungsdämpfer sind also in Kraftflussrichtung von der Eingangsseite zu der Ausgangsseite aufeinanderfolgend angeordnet. In Weiterbildung dieser Ausführungsform ist dann der Schwingungstilger zwischen den Torsionsschwingungsdämpfer eingebunden, wobei dieser alternativ dazu aber auch eingangsseitig oder ausgangsseitig zu beiden Torsionsschwingungsdämpfern sitzen könnte.

Gemäß einer weiteren Ausgestaltungsmöglichkeit der Erfindung sind die Torsionsschwingungsdämpfer in einer gemeinsamen Ebene angeordnet. Der Schwingungstilger ist dabei axial unmittelbar neben den Torsionsschwingungsdämpfern und radial auf Höhe des radial innenliegenden Torsionsschwingungsdämpfers vorgesehen. Durch die Anordnung der Torsionsschwingungsdämpfer in einer Ebene lässt sich ein besonders kompakter axialer Aufbau des Torsionsschwingungsdämpfungssystems realisieren.

In Kombination der vorgenannten Ausgestaltungsmöglichkeit der Erfindung und einer Reihenschaltung der Torsionsschwingungsdämpfer sind die Torsionsschwingungsdämpfer zu einem zweireihigen Zweimassenschwungrad zusammengefasst. In diesem Fall bilden die beiden Torsionsschwingungsdämpfer also eine Einheit, wobei diese alternativ dazu aber auch getrennt voneinander als eigenständige Komponenten vorliegen können. Im letztgenannten Fall können die Torsionsschwingungsdämpfer dann einen einander entsprechenden oder auch abweichenden Aufbau aufweisen.

Gemäß einer weiteren Ausgestaltungsmöglichkeit der Erfindung sind die Dämpfungseinrichtung und/oder der Schwingungstilger zumindest in einem vertikal untenliegenden Bereich von einer feststehenden Schale radial umgeben. Mit anderen Worten ist also eine stillstehende Schale vorgesehen, die vertikal unten zu der Dämpfungseinrichtung und/oder dem Schwingungstilger liegt und dort die Dämpfungseinrichtung oder den Schwingungstilger oder beide radial umschließt. In vorteilhafter Weise wird durch die Schale verhindert, dass die Dämpfungseinrichtung und der Schwingungstilger vertikal unten zu tief in Schmiermittel eintauchen und es zu erhöhten Planschverlusten und einem Verschäumen des Öls kommt. Denn durch die Schale kann in dem Bereich der Dämpfungseinrichtung und des Schwingungstilgers ein Bereich mit einem niedrigeren Schmiermittelstand geschaffen werden, als in dem umliegenden Bereich des Nassraumes. Besonders bevorzugt kommt die Schale dabei zur Anwendung, wenn die Torsionsschwingungsdämpfer in einer Ebene angeordnet sind. Zudem umgibt die Schale bevorzugt die Dämpfungseinrichtung und den Schwingungstilger.

Gemäß der Erfindung ist eingangsseitig des Torsionsschwingungsdämpfungssystems eine Hohlwelle vorgesehen, in welche eine weitere Welle eingeführt und drehfest mit dieser verbunden ist. Über die weitere Welle ist eine Verbindung zu der Dämpfungseinrichtung und dem Schwingungstilger hergestellt, wobei auf der Hohlwelle ein Dichtungsschild aufgebracht ist, welches einer Trennung des Nassraumes von einem Trockenraum des Gehäuses dient. In einer optionalen Weiterbildung dieser Ausführungsform sind die Hohlwelle und die weitere Welle dabei über eine Mitnahmeverzahnung miteinander verbunden, welche als Presspassung realisiert ist. Mittels der Presspassung wird dabei verhindert, dass es im Zuge von Lastwechseln im Antriebsstrang zu einem Umschlagen in der Mitnahmeverzahnung und damit zu einer Geräuschbildung im Bereich des Torsionsschwingungsdämpfungssystem kommen kann, zumal Torsionsschwingungen im Bereich der Mitnahmeverzahnung noch nicht abgedämpft sind.

Erfindungsgemäß bilden die Hohlwelle, die weitere Welle, die Dämpfungseinrichtung, der Schwingungstilger und das Dichtungsschild eine vormontierte Einheit. Dies hat den Vorteil, dass das Dichtungsschild trotz der als Presspassung realisierten Mitnahmeverzahnung mit einer Dichtung auf der Hohlwelle angeordnet werden kann. Des Weiteren reduziert die Bildung einer vormontierten Einheit den Montageaufwand, da diese Einheit im Zuge der Montage nur noch im Kraftfahrzeugantriebsstrang anzuordnen ist.

Das Torsionsschwingungsdämpfungssystem ist Teil eines erfindungsgemäßen Hybridantriebsmoduls für einen Kraftfahrzeugantriebsstrang. Dieses Hybridantriebsmodul umfasst dabei ein Gehäuse, in welchem das Torsionsschwingungsdämpfungssystem und eine Elektromaschine aufgenommen sind. Das Torsionsschwingungsdämpfungssystem setzt sich hierbei erfindungsgemäß aus einer Dämpfungseinrichtung und einem Schwingungstilger zusammen, die zwischen einer Eingangsseite und einer Ausgangsseite des Torsionsschwingungsdämpfungssystems vorgesehen und in einem Nassraum des Gehäuses platziert sind. Ferner ist das Torsionsschwingungsdämpfungssystem an seiner Ausgangsseite mit einer Trennkupplung verbunden, über welche das Torsionsschwingungsdämpfungssystem mit einer Abtriebsseite des Hybridantriebsmoduls verbindbar ist, mit der auch die Elektromaschine in Verbindung steht. Erfindungsgemäß umfasst die Dämpfungseinrichtung dabei dann zwei Torsionsschwingungsdämpfer.

Durch Vorsehen eines erfindungsgemäß gestalteten Torsionsschwingungsdämpfungssystems mit zwei Torsionsschwingungsdämpfern kann im Bereich eines Hybridantriebsmoduls ebenfalls eine geeignete Dämpfung von Torsionsschwingungen verwirklicht werden. Zudem können mittels der Elektromaschine des Hybridantriebsmoduls verschiedene Funktionen realisiert werden, indem diese generatorisch oder elektromotorisch betrieben wird. So kann die Elektromaschine im elektromotorischen Betrieb die Antriebsmaschine durch Einspeisen eines zusätzlichen Antriebsmoments (Boosten) unterstützen oder auch einen rein elektrischen Antrieb verwirklichen. Zudem kann über die Elektromaschine eine Start-Stopp-Funktion realisiert werden, indem diese die Brennkraftmaschine im Zuge des Startvorgangs anschleppt. Im generatorischen Betrieb kann während des Betriebs über die Antriebsmaschine Strom erzeugt oder dieser auch im Zuge von Bremsvorgängen rückgewonnen werden (Rekuperation). Während des rein elektrischen Antriebs und auch der Rekuperation ist dabei jeweils die Verbindung zu der Antriebsmaschine durch Öffnen der Trennkupplung zu trennen.

Die Elektromaschine ist insbesondere als permanent erregte Synchronmaschine ausgeführt. Zudem ist ein Rotor der Elektromaschine bevorzugt direkt drehfest mit der Abtriebsseite des Hybridantriebsmoduls verbunden, wobei eine Rotornabe des Rotors dabei direkt auf eine Antriebswelle eines im Kraftfahrzeugantriebsstrang folgenden Kraftfahrzeuggetriebes gesteckt sein kann. Hierdurch kann eine Lagerung des Rotors der Elektromaschine über die Lagerung der Antriebswelle des Kraftfahrzeuggetriebes realisiert werden. Bevorzugt sind dabei Passungen zwischen Rotornabe und Antriebswelle des Kraftfahrzeuggetriebes vorgesehen, um den Rotor der Elektromaschine entsprechend auf der Antriebswelle zu zentrieren.

Ein Stator der Elektromaschine ist insbesondere an dem Gehäuse des Hybridantriebmoduls befestigt, wobei hierbei bevorzugt ein Aufbau gewählt wird, bei welchem ein Statorträger an einer Zwischenwand, bevorzugt über Schraubverbindungen, befestigt ist. Diese Zwischenwand dient dann auch der Aufnahme einer Lagerung der Getriebeeingangswelle, so dass die Befestigung des Stators und die Lagerung des Rotors an demselben Teil des Gehäuses stattfinden. Des Weiteren trennt die Zwischenwand den Nassraum von einem Innenraum eines nachfolgenden Kraftfahrzeuggetriebes. Weiter bevorzugt übernimmt die Zwischenwand dabei auch die Funktion der Ölzuführung zu bestimmten Komponenten und ist zu diesem Zweck mit entsprechenden Ölleitungen durchsetzt.

Im Rahmen der Erfindung wird ein gegebenenfalls bestehender radialer Versatz im Torsionsschwingungsdämpfungssystem bevorzugt in dem ausgangsseitig liegenden Torsionsschwingungsdämpfer des Torsionsschwingungsdämpfungssystems ausgeglichen. Dies erfolgt dabei insbesondere in einem Federsatz des Torsionsschwingungsdämpfers. Dabei ist unter einem "radialen Versatz" eine ungewollte, sich beispielsweise aufgrund von Fertigungstoleranzen oder Laufungenauigkeiten von Komponenten einstellende radiale Lageabweichung zwischen miteinander zu verbindenden Komponenten zu verstehen.

In Weiterbildung der Erfindung wird ein axialer Versatz im Hybridantriebmodul in der Trennkupplung ausgeglichen, wobei diese hierzu bevorzugt als Lamellenkupplung gestaltet ist. Der Ausgleich des axialen Versatzes erfolgt dabei dann insbesondere in einer Lamellenverzahnung der Lamellenkupplung, über welche Lamellen drehfest und axial bewegbar geführt sind. Erfindungsgemäß ist dabei unter einem "axialen Versatz eine ungewollte, sich beispielsweise aufgrund von Fertigungstoleranzen einstellende axiale Lageabweichung zwischen miteinander zu verbindenden Komponenten zu verstehen. Dabei kann der axiale Versatz dem Hybridantriebsmodul innerhalb des Kraftfahrzeugantriebsstranges von außen aufgeprägt sein, indem Komponenten des Kraftfahrzeugantriebsstranges, zwischen denen das Hybridantriebsmodul liegt, für den axialen Versatz sorgen. Diese Lageabweichung wird nun vorliegend durch die Trennkupplung ausgeglichen. Hierdurch kann eine Axiallagerung zwischen dem Torsionsschwingungsdämpfungssystem und der Abtriebsseite des Hybridantriebmoduls entfallen.

Das bei dem Hybridantriebmodul zur Anwendung kommende Torsionsschwingungsdämpfungssystem ist gemäß einer der vorstehend beschriebenen Varianten ausgeführt. Des Weiteren ist das Hybridantriebmodul insbesondere Teil eines Kraftfahrzeugantriebsstranges und sitzt hier dann insbesondere zwischen einer Antriebsmaschine und einem nachfolgenden Kraftfahrzeuggetriebe. Das Hybridantriebsmodul kann auch Bestandteil des Kraftfahrzeuggetriebes sein. Hybridantriebsmodul und Kraftfahrzeuggetriebe können dazu in einem gemeinsamen Gehäuse aufgenommen sein, bei welchem es sich insbesondere um ein Getriebegehäuse des Kraftfahrzeuggetriebes handelt.

Die Erfindung ist nicht auf die angegebene Kombination der nebengeordneten oder hiervon abhängigen Ansprüche beschränkt. Es ergeben sich darüber hinaus Möglichkeiten, einzelne Merkmale, auch soweit sie aus den Ansprüchen, der nachfolgenden Beschreibung einer bevorzugten Ausführungsform der Erfindung oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Eine bevorzugte Ausführungsform der Erfindung, die nachfolgend erläutert wird, ist in den Zeichnungen dargestellt. Es zeigt:
- Fig. 1: eine schematische Ansicht eines Kraftfahrzeugantriebsstranges; und
- Fig. 2: eine Schnittansicht des Kraftfahrzeugantriebsstranges aus Fig. 1, im Bereich eines Hybridantriebsmoduls gemäß einer bevorzugten Ausführungsform der Erfindung.

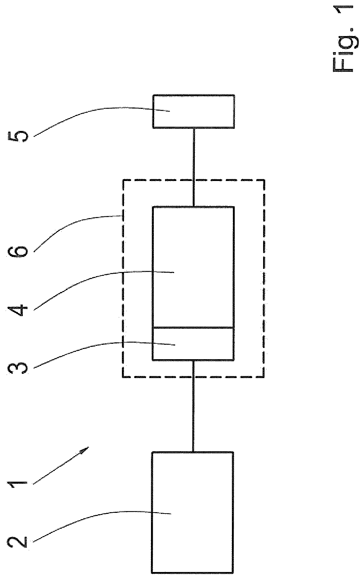

Aus Fig. 1 geht eine schematische Ansicht eines Kraftfahrzeugantriebsstranges 1 hervor, bei welchem es sich insbesondere um den Antriebsstrang eines Kraftfahrzeuges in Form eines Pkws handelt. Der Kraftfahrzeugantriebsstrang 1 umfasst eine Antriebsmaschine 2 in Form einer Verbrennungskraftmaschine, die abtriebsseitig über ein zwischenliegendes Hybridantriebsmodul 3 mit einem Kraftfahrzeuggetriebe 4 verbunden werden kann.

Das Kraftfahrzeuggetriebe 4 ist dabei bevorzugt als Automatikgetriebe in Planetenbauweise gestaltet und steht abtriebsseitig mit weiteren, nachfolgenden - vorliegend nur angedeuteten - Komponenten 5 des Kraftfahrzeugantriebsstranges in Verbindung, so zum Beispiel mit einem Längs- oder Querdifferential. Vorliegend sind das Hybridantriebsmodul 3 und das Kraftfahrzeuggetriebe 4 in einem gemeinsamen Gehäuse 6 aufgenommen, bei welchem es sich insbesondere um ein Getriebegehäuse des Kraftfahrzeuggetriebes 4 handelt.

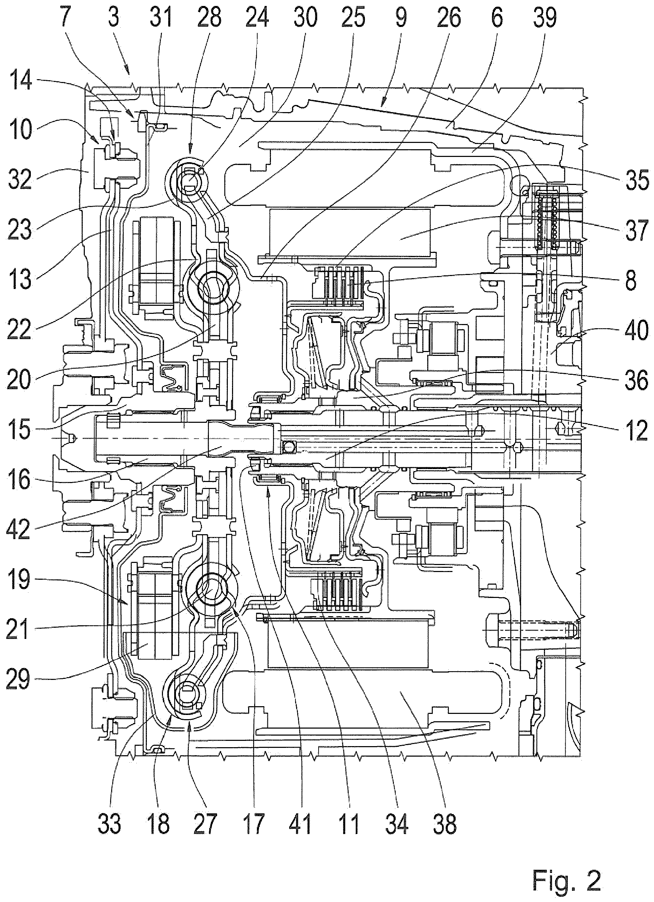

In Fig. 2 ist der Kraftfahrzeugantriebsstrang 1 aus Fig. 1 im Bereich des Hybridantriebmoduls 3 geschnitten dargestellt, wobei das Hybridantriebmodul 3 dabei entsprechend einer bevorzugten Ausführungsform der Erfindung gestaltet ist. Dabei setzt sich das Hybridantriebmodul 3 aus einem Torsionsschwingungsdämpfungssystem 7, einer Trennkupplung 8 und einer Elektromaschine 9 zusammen. Zudem ist das Hybridantriebmodul 3 an einer Antriebsseite 10 innerhalb des Kraftfahrzeugantriebsstranges 1 drehfest mit einer Kurbelwelle der Antriebsmaschine 2 verbunden und steht ein einer Abtriebsseite 11 drehfest mit einer Antriebswelle 12 des nachfolgenden Kraftfahrzeuggetriebes 4 in Verbindung. Die Antriebsseite 10 wird dabei durch eine flexible Verbindungsplatte 13 gebildet, welche zugleich auch eine Eingangsseite 14 des Torsionsschwingungsdämpfungssystems 7 definiert und drehfest mit einer Hohlwelle 15 verbunden ist.

Wie des Weiteren in Fig. 2 zu erkennen ist, ist die Hohlwelle 15 drehfest mit einer weiteren Welle 16 verbunden, die zu diesem Zweck in die Hohlwelle 15 eingeführt ist und eine Verbindung zu zwei Torsionsschwingungsdämpfern 17 und 18, sowie einem Schwingungstilger 19 herstellt. Konkret ist auf der Welle 16 dabei eine Primärseite 20 des Torsionsschwingungsdämpfers 17 drehfest angeordnet, wobei die Primärseite 20 über einen Federsatz 21 in Form mehrerer Druckfedern und Druckfederführungselementen drehelastisch mit einer Sekundärseite 22 gekoppelt ist, die zugleich eine Primärseite 23 des nachfolgenden Torsionsschwingungsdämpfers 18 bildet und mit der auch der Schwingungstilger 19 drehfest verbunden ist. Die Sekundärseite 22 des Torsionsschwingungsdämpfers 17 und damit auch die Primärseite 23 des Torsionsschwingungsdämpfers 18 ist in Kraftflussrichtung dann im Weiteren über einen Federsatz 24 des Torsionsschwingungsdämpfers 18 mit einer Sekundärseite 25 drehelastisch gekoppelt, die auch eine Ausgangsseite 26 des Torsionsschwingungsdämpfungssystems 7 bildet. Dabei liegt auch der Federsatz 24 des Torsionsschwingungsdämpfers 18 in Form mehrerer Druckfedern und Druckfederführungselementen vor.

In Fig. 2 ist zu erkennen, dass die beiden Torsionsschwingungsdämpfer 17 und 18 im Wesentlichen in einer Ebene liegen und gemeinsam eine Dämpfungseinrichtung 27 des Torsionsschwingungsdämpfungssystems 7 definieren. Aufgrund ihres Aufbaus und ihrer Reihenschaltung bilden die beiden Torsionsschwingungsdämpfer 17 und 18 dabei ein zweireihiges Zweimassenschwungrad 28, welches sich durch einen kompakten axialen Aufbau und eine deutlich abgesenkte Verdrehsteifigkeit auszeichnet.

Der Schwingungstilger 19 ist zwischen den beiden Torsionsschwingungsdämpfern 17 und 18 eingebunden und als drehzahladaptiver Schwingungstilger gestaltet. Hierzu umfasst der Schwingungstilger 19 mehrere pendelnd gelagerte Fliehgewichte 29, die drehzahlabhängig ausgelenkt werden und so für eine Reduzierung von Torsionsschwingungen durch gezielte Verstimmung des schwingungsfähigen Systems sorgen.

Die Dämpfungseinrichtung 27 in Form des zweireihigen Zweimassenschwungrades 28 und der Schwingungstilger 19 sind gemeinsam in einem Nassraum 30 des umliegenden Gehäuses 6 aufgenommen, in welchem sich Schmiermittel in Form von Öl befindet. Der Nassraum 30 wird dabei über ein Dichtungsschild 31 von einem Trockenraum 32 getrennt, in welchem die flexible Verbindungsplatte angeordnet und damit auch die Verbindung zur Kurbelwelle der Antriebsmaschine 2 hergestellt ist. Eine Schmierung der Dämpfungseinrichtung 27 und auch des Schwingungstilgers 19 erfolgt dabei von radial innen über - vorliegend nicht weiter im Detail dargestellte - Zuführbohrungen. Im Anschluss daran wird das Öl nach radial außen abgeführt und sammelt sich im vertikal unteren Bereich des Nassraumes 30, von wo aus es wieder zur Schmierung entnommen werden kann.

Da das Zweimassenschwungrad 28 radial relativ groß baut und in der Folge insbesondere der Torsionsschwingungsdämpfer 18 in das Ölbad des Nassraumes 30 eintauchen würde, sind die Dämpfungseinrichtung 27 und auch der Schwingungstilger 19 im vertikal unteren Bereich von einer Schale 33 radial umgeben, die dort den Bereich des Schwingungstilgers 19 und der Dämpfungseinrichtung 27 von dem Öl abschirmt und somit Planschverluste minimiert. Diese Schale 33 ist dabei am Dichtungsschild 31 befestigt.

Die drehfeste Verbindung zwischen der Hohlwelle 15 und der weiteren Welle 16 ist über eine Mitnahmeverzahnung realisiert, wobei diese Mitnahmeverzahnung dabei als Presspassung gestaltet ist, um Geräuschbildungen bei Lastwechseln im Kraftfahrzeugantriebsstrang zu verhindern. Aufgrund dieser Pressverbindung zwischen der Hohlwelle 15 und der weiteren Welle 16 ist auch das Dichtungsschild 31 vor dem Fügen der beiden Wellen auf der Hohlwelle 15 mit der entsprechenden Dichtung anzuordnen. Gemeinsam mit der Dämpfungseinrichtung 27 und dem Schwingungstilger 19 bilden die Hohlwelle 15, die weitere Welle 16 und das Dichtungsschild 31 eine vormontierte Einheit, die im Hybridantriebsmodul 3 montiert wird.

An der Ausgangsseite 26 ist das Torsionsschwingungsdämpfungssystem 7 mit der Trennkupplung 8 verbunden, über welche die Ausgangsseite 26 des Torsionsschwingungsdämpfungssystems 7 mit der Abtriebsseite 11 des Hybridantriebsmoduls 3 verbunden werden kann. Die Trennkupplung 8 ist dabei als Lamellenkupplung gestaltet, deren Innenlamellenträger 34 drehfest mit der Sekundärseite 25 des Torsionsschwingungsdämpfers 18 verbunden und deren Außenlamellenträger 35 an einer Rotornabe 36 der Elektromaschine 9 ausgebildet ist. Die Rotornabe 36 führt einen Rotor 37 der Elektromaschine 9, welcher radial innenliegend zu einem Stator 38 der Elektromaschine 9 läuft. Die Elektromaschine 9 ist dabei als permanent erregter Synchronmotor realisiert, wobei der Stator 38 über einen Statorträger 39 an einer Zwischenwand 40 befestigt ist, welche das Hybridantriebsmodul 3 vom Kraftfahrzeuggetriebe 4 trennt.

Über die Elektromaschine 9 können verschiedene Funktionen, wie das Rückgewinnen elektrischer Energie im Bremsbetrieb des Kraftfahrzeuges (Rekuperieren), ein Betrieb als Generator, eine Start-Stopp-Funktion, Boosten und/oder ein rein elektrisches Fahren realisiert werden. Dabei sind das rein elektrische Fahren und auch das Rekuperieren bei geöffneter Trennkupplung 8 und damit einer Trennung zur Antriebsmaschine 2 zu vollziehen, während ein Generatorbetrieb, die Start-Stopp-Funktion und auch ein Boosten über die Elektromaschine 9 jeweils bei geschlossener Trennkupplung 8 stattfinden.

Die Rotornabe 36 ist vorliegend direkt auf die Antriebswelle 12 gesteckt und auf dieser über Passungen zentriert. Eine Befestigung erfolgt dabei über eine Nutmutter 41. Des Weiteren wird ein im Hybridantriebsmodul 3 vorhandener radialer Versatz im Federsatz 24 des Torsionsschwingungsdämpfers 18 ausgeglichen, während ein axialer Versatz innerhalb der Trennkupplung 8 über die Lamellenverzahnung des Innenlamellenträgers 34 kompensiert wird.

Schließlich ist noch zwischen der Welle 16 und der Antriebswelle 12 ein Rohrstück 42 vorgesehen ist, welches beidseitig ballige gestaltet ist und einer Schmierölübergabe zwischen der Antriebswelle 12 und der Welle 16 dient. Dabei ermöglicht das Rohrstück 42 radiale Bewegungen zwischen der Welle 16 und damit dem Torsionsschwingungsdämpfungssystem 7 und der Antriebswelle 12. Das in diesen Bereich geführte Schmieröl wird dann nach radial außen zur Schmierung des Schwingungstilgers 19 und auch des Zweimassenschwungrades 28 geführt, wobei das Öl im Anschluss daran nach radial außen abströmen kann.

Mittels der erfindungsgemäßen Ausgestaltung eines Torsionsschwingungsdämpfungssystems und damit auch eines Hybridantriebsmoduls kann eine geeignete Dämpfung von Torsionsschwingungen erreicht werden.

### Bezugszeichen

- 1: Kraftfahrzeugantriebsstrang
- 2: Antriebsmaschine
- 3: Hybridantriebsmodul
- 4: Kraftfahrzeuggetriebe
- 5: Komponenten
- 6: Gehäuse
- 7: Torsionsschwingungsdämpfungssystem
- 8: Trennkupplung
- 9: Elektromaschine
- 10: Antriebsseite
- 11: Abtriebsseite
- 12: Antriebswelle
- 13: Verbindungsplatte
- 14: Eingangsseite
- 15: Hohlwelle
- 16: Welle
- 17: Torsionsschwingungsdämpfer
- 18: Torsionsschwingungsdämpfer
- 19: Schwingungstilger
- 20: Primärseite
- 21: Federsatz
- 22: Sekundärseite
- 23: Primärseite
- 24: Federsatz
- 25: Sekundärseite
- 26: Ausgangsseite
- 27: Dämpfungseinrichtung
- 28: Zweimassenschwungrad
- 29: Fliehgewicht
- 30: Nassraum
- 31: Dichtungsschild
- 32: Trockenraum
- 33: Schale
- 34: Innenlamellenträger
- 35: Außenlamellenträger
- 36: Rotornabe
- 37: Rotor
- 38: Stator
- 39: Statorträger
- 40: Zwischenwand
- 41: Nutmutter
- 42: Rohrstück

## Patentansprüche

1. Hybridantriebsmodul (3) für einen Kraftfahrzeugantriebsstrang (1), umfassend ein Gehäuse (6), in welchem ein Torsionsschwingungsdämpfungssystem (7) und eine Elektromaschine (9) aufgenommen sind, wobei sich das Torsionsschwingungsdämpfungssystem (7) aus einer Dämpfungseinrichtung (27) und einem Schwingungstilger (19) zusammensetzt, die zwischen einer Eingangsseite (14) und einer Ausgangsseite (26) des Torsionsschwingungsdämpfungssystems (7) vorgesehen und in einem Nassraum (30) des Gehäuses (6) platziert sind, wobei das Torsionsschwingungsdämpfungssystem (7) an seiner Ausgangsseite (26) mit einer Trennkupplung (8) verbunden ist, über welche das Torsionsschwingungsdämpfungssystem (7) mit einer Abtriebsseite (11) des Hybridantriebsmoduls (3) verbindbar ist, mit der auch die Elektromaschine (9) in Verbindung steht, **dadurch gekennzeichnet, dass** die Dämpfungseinrichtung (27) zwei Torsionsschwingungsdämpfer (17, 18) umfasst,
dass eingangsseitig eine Hohlwelle (15) vorgesehen ist, in welche eine weitere Welle (16) eingeführt und drehfest mit dieser verbunden ist, wobei über die weitere Welle (16) eine Verbindung zu der Dämpfungseinrichtung (27) und dem Schwingungstilger (19) hergestellt und auf der Hohlwelle (15) ein Dichtungsschild (31) aufgebracht ist, welches einer Trennung des Nassraumes (30) von einem Trockenraum (32) des Gehäuses (6) dient,
und dass die Hohlwelle (15), die weitere Welle (16), die Dämpfungseinrichtung (27), der Schwingungstilger (19) und das Dichtungsschild (31) eine vormontierte Einheit bilden.

2. Hybridantriebsmodul (3) nach Anspruch 1, **dadurch gekennzeichnet, dass** die Torsionsschwingungsdämpfer (17, 18) in Reihe geschaltet sind.

3. Hybridantriebsmodul (3) nach Anspruch 2, **dadurch gekennzeichnet, dass** der Schwingungstilger (19) zwischen den Torsionsschwingungsdämpfern (17, 18) eingebunden ist.

4. Hybridantriebsmodul (3) nach einem der Ansprüche 1 bis 3, **dadurch gekennzeichnet, dass** die Torsionsschwingungsdämpfer (17, 18) in einer gemeinsamen Ebene angeordnet sind, wobei der Schwingungstilger (19) axial unmittelbar neben den Torsionsschwingungsdämpfern (17, 18) und radial auf Höhe des radial innenliegenden Torsionsschwingungsdämpfers (17) vorgesehen ist.

5. Hybridantriebsmodul (3) nach den Ansprüchen 2 oder 3 und 4, **dadurch gekennzeichnet, dass** die Torsionsschwingungsdämpfer (17, 18) zu einem zweireihigen Zweimassenschwungrad (28) zusammengefasst sind.

6. Hybridantriebsmodul (3) nach einem der vorhergehenden Ansprüche, **dadurch gekennzeichnet, dass** die Dämpfungseinrichtung (27) und/oder der Schwingungstilger (19) zumindest in einem vertikal untenliegenden Bereich von einer feststehenden Schale (33) radial umgeben sind.

7. Hybridantriebsmodul (3) nach Anspruch 1, **dadurch gekennzeichnet, dass** die Hohlwelle (15) und die weitere Welle (16) über eine Mitnahmeverzahnung miteinander verbunden sind, welche als Presspassung realisiert ist.

8. Kraftfahrzeuggetriebe (4), umfassend ein Hybridantriebsmodul (3) nach einem der vorangegangenen Ansprüche.

9. Kraftfahrzeugantriebsstrang (1), umfassend ein Hybridantriebsmodul (3) nach Anspruch 1 bis 7.

## Claims

1. Hybrid drive module (3) for a motor vehicle drive train (1), comprising a housing (6), in which a torsional vibration damping system (7) and an electric machine (9) are received, the torsional vibration damping system (7) consisting of a damping device (27) and a vibration absorber (19) which are provided between an input side (14) and an output side (26) of the torsional vibration damping system (7) and are positioned in a wet space (30) of the housing (6), the torsional vibration damping system (7) being connected on its output side (26) to a separating clutch (8), via which the torsional vibration damping system (7) can be connected to an output side (11) of the hybrid drive module (3), to which output side (11) the electric machine (9) is also connected, **characterized in that** the damping device (27) comprises two torsional vibration dampers (17, 18),
**in that** a hollow shaft (15) is provided on the input side, into which hollow shaft (15) a further shaft (16) is introduced and is connected fixedly to the said hollow shaft (15) so as to rotate with it, a connection to the damping device (27) and the vibration absorber (19) being established via the further shaft (16), and a sealing plate (31) being applied to the hollow shaft (15), which sealing plate (31) serves to separate the wet space (30) from a dry space (32) of the housing (6),
and **in that** the hollow shaft (15), the further shaft (16), the damping device (27), the vibration absorber (19) and the sealing plate (31) form one preassembled unit.

2. Hybrid drive module (3) according to Claim 1, **characterized in that** the torsional vibration dampers (17, 18) are connected in series.

3. Hybrid drive module (3) according to Claim 2, **characterized in that** the vibration absorber (19) is incorporated between the torsional vibration dampers (17, 18) .

4. Hybrid drive module (3) according to one of Claims 1 to 3, **characterized in that** the torsional vibration dampers (17, 18) are arranged in a common plane, the vibration absorber (19) being provided axially directly next to the torsional vibration dampers (17, 18) and radially at the level of the radially inner torsional vibration damper (17).

5. Hybrid drive module (3) according to Claims 2 or 3 and 4, **characterized in that** the torsional vibration dampers (17, 18) are combined to form a double-row dual-mass flywheel (28).

6. Hybrid drive module (3) according to one of the preceding claims, **characterized in that** the damping device (27) and/or the vibration absorber (19) are surrounded radially at least in a vertically lower region by a stationary shell (33).

7. Hybrid drive module (3) according to Claim 1, **characterized in that** the hollow shaft (15) and the further shaft (16) are connected to one another via a driving spline system which is realized as an interference fit.

8. Motor vehicle transmission (4), comprising a hybrid drive module (3) according to one of the preceding claims.

9. Motor vehicle drive train (1), comprising a hybrid drive module (3) according to Claims 1 to 7.

## Revendications

1. Module d'entraînement hybride (3) destiné à une chaîne cinématique de véhicule automobile (1), comprenant un carter (6) dans lequel sont logés un système d'amortissement de vibrations de torsion (7) et une machine électrique (9), le système d'amortissement de vibrations de torsion (7) étant composé d'un dispositif d'amortissement (27) et d'un amortisseur de vibrations (19) qui sont prévus entre un côté entrée (14) et un côté sortie (26) du système d'amortissement de vibrations de torsion (7) et qui sont placés dans un espace humide (30) du carter (6), dans lequel le système d'amortissement de vibrations de torsion (7) est relié sur son côté sortie (26) à un embrayage de séparation (8) permettant de relier le système d'amortissement de vibrations de torsion (7) à un côté sortie (11) du module d'entraînement hybride (3) auquel est également reliée la machine électrique (9),
**caractérisé**
**en ce que** le dispositif d'amortissement (27) comprend deux amortisseurs de vibrations de torsion (17, 18),
**en ce que** côté entrée, un arbre creux (15) est prévu dans lequel un arbre supplémentaire (16) est introduit et est solidaire en rotation avec celui-ci, dans lequel l'arbre supplémentaire (16) permet d'établir une liaison avec le dispositif d'amortissement (27) et l'amortisseur de vibrations (19), et sur l'arbre creux (15) est appliqué un flasque d'étanchéité (31) qui sert à séparer l'espace humide (30) d'un espace sec (32) du carter (6),
et **en ce que** l'arbre creux (15), l'arbre supplémentaire (16), le dispositif d'amortissement (27), l'amortisseur de vibrations (19) et le flasque d'étanchéité (31) constituent une unité prémontée.

2. Module d'entraînement hybride (3) selon la revendication 1, **caractérisé en ce que** les amortisseurs de vibrations de torsion (17, 18) sont montés en série.

3. Module d'entraînement hybride (3) selon la revendication 2, **caractérisé en ce que** l'amortisseur de vibrations (19) est inséré entre les amortisseurs de vibrations de torsion (17, 18).

4. Module d'entraînement hybride (3) selon l'une quelconque des revendications 1 à 3, **caractérisé en ce que** les amortisseurs de vibrations de torsion (17, 18) sont disposés dans un plan commun, l'amortisseur de vibrations (19) étant prévu axialement directement à côté des amortisseurs de vibrations de torsion (17, 18) et radialement à hauteur de l'amortisseur de vibrations de torsion (17) radialement intérieur.

5. Module d'entraînement hybride (3) selon les revendications 2 ou 3 et 4, **caractérisé en ce que** les amortisseurs de vibrations de torsion (17, 18) sont regroupés en un volant bimasse (28) à deux rangées.

6. Module d'entraînement hybride (3) selon l'une quelconque des revendications précédentes, **caractérisé en ce que** le dispositif d'amortissement (27) et/ou l'amortisseur de vibrations (19) sont entourés radialement par une coque fixe (33) au moins dans une zone verticalement sous-jacente.

7. Module d'entraînement hybride (3) selon la revendication 1, **caractérisé en ce que** l'arbre creux (15) et l'arbre supplémentaire (16) sont interconnectés par l'intermédiaire d'une denture d'entraînement réalisée sous forme d'ajustement sans jeu.

8. Transmission de véhicule automobile (4), comprenant un module d'entraînement hybride (3) selon l'une quelconque des revendications précédentes.

9. Chaîne cinématique de véhicule automobile (1) comprenant un module d'entraînement hybride (3) selon les revendications 1 à 7.
